# EUROPEAN PATENT APPLICATION

(11) **EP 4 660 827 A1**
(43) Date of publication of application: **10.12.2025**
(21) Application number: 25180455.5
(22) Date of filing: 03.06.2025
(51) Int. Cl.: G06F 16/245

(54) **TECHNIQUES FOR ACCELERATING QUERIES USING MULTIPLE GRAPHICS PROCESSING UNITS**

(30) Priority: 06.06.2024 US 202418736226
(71) Applicant: Microsoft Technology Licensing, LLC, Redmond, WA 98052-6399 (US)
(72) Inventor: Sen, Rathijit, Redmond, WA, 98052 (US); Cui, Wei, Redmond, WA, 98052 (US); Curino, Carlo A., Redmond, WA, 98052 (US); Cheng, Peng, Redmond, WA, 98052 (US); Interlandi, Matteo, Redmond, WA, 98052 (US)
(74) Representative: Grünecker Patent- und Rechtsanwälte PartG mbB

(57) **Abstract**

Described are examples for using multiple graphics processing units (GPUs) to accelerate a database query. Data for a database query can be loaded from the database into memories of multiple GPUs for parallel processing by the multiple GPUs. At least a portion of the data loaded into a memory for one of the multiple GPUs can be moved to a memory for a different one of the multiple GPUs. A compute process can be executed, via parallel processing on the multiple GPUs, for the query to perform data processing related to the database query.

## Description

### BACKGROUND

Database systems are widely used for storing data and processing queries over the data, which can include analytical queries that combine data from multiple queries and/or from one or more data sources. Due to its high memory bandwidth and parallel computing capabilities, a graphics processing unit (GPU) has been used to accelerate database queries by loading data to be processed into the memory of the GPU, and causing the GPU to process the various data in parallel. GPU memory, however, may be smaller than main memory in modem servers, and thus acceleration using a GPU may be limited to smaller datasets or batches of data, or may require computations to be split with a central processing unit (CPU). As data volume increases, however, the amount of data processed in a database query increases, and acceleration of a query using a GPU may have decreased performance for larger datasets.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an example, a device for utilizing multiple graphics processing units (GPUs) to accelerate a database query is provided. The device includes one or more memories storing instructions, and one or more processors coupled to the one or more memories. The one or more processors are configured to execute the instructions to receive a database query requesting data operations on a database, load, based on the database query, data from the database into memories of multiple GPUs for parallel processing by the multiple GPUs, move at least a portion of the data loaded into a memory for one of the multiple GPUs into a memory for a different one of the multiple GPUs, and execute, via parallel processing on the multiple GPUs, a compute process for the query to perform data processing related to the database query.

In another example, a computer-implemented method for using multiple GPUs to accelerate a database query is provided. The method includes loading, for a database query, data from the database into memories of multiple GPUs for parallel processing by the multiple GPUs, moving at least a portion of the data loaded into a memory for one of the multiple GPUs into a memory for a different one of the multiple GPUs, executing, via parallel processing on the multiple GPUs, a compute process for the query to perform data processing related to the database query, and providing query results of the database query based on output from executing the compute process on the multiple GPUs.

In another example, a non-transitory computer-readable medium storing instructions thereon that, when executed by at least one computing device, cause the at least one computing device to perform operations for using multiple GPUs to accelerate a database query is provided. The operations include loading, for a database query, data from the database into memories of multiple GPUs for parallel processing by the multiple GPUs, moving at least a portion of the data loaded into a memory for one of the multiple GPUs into a memory for a different one of the multiple GPUs, and executing, via parallel processing on the multiple GPUs, a compute process for the query to perform data processing related to the database query.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Figure 1 is a schematic diagram of an example of a device for performing functions related to accelerating database queries using multiple graphics processing units (GPUs), in accordance with aspects described herein.
Figure 2 is a flow diagram of an example of a method for accelerating database queries by using multiple GPUs, in accordance with aspects described herein.
Figure 3 illustrates an example of a memory configuration for multiple GPUs and performing an all-gather function for database queries on the memory, in accordance with aspects described herein.
Figure 4 illustrates an example of a memory configuration for multiple GPUs and performing an all-to-all function for database queries on the memory, in accordance with aspects described herein.
Figure 5 illustrates an example of tabular data for a database query and performing an all-to-all or an all-gather function on the tabular data in moving the data among multiple GPUs, in accordance with aspects described herein.
Figure 6 illustrates an example of join operations for performing on a Table A and Table B, in accordance with aspects described herein.
Figure 7 illustrates an example of existence operations for performing on a Table A and Table B, in accordance with aspects described herein.
Figure 8 illustrates an example of groupby operations for performing on a Table A, in accordance with aspects described herein.
Figure 9 is a schematic diagram of an example of a device for performing functions described herein, in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known components are shown in block diagram form in order to avoid obscuring such concepts.

This disclosure describes various examples related to accelerating database queries using multiple graphics processing units (GPUs). For example, a server or virtual machine (VM) may include multiple interconnected GPUs, which can communicate with one another over a high-bandwidth link between the GPUs. Data for processing as part of a database query can be loaded on the multiple GPUs, and the link between the GPUs can be exploited to move data between the multiple GPUs for performing parallel processing of the data associated with the database query. For example, a library managing the multiple GPUs can provide access to primitives to perform operations that utilize the high-bandwidth link between the multiple GPUs. The primitives may include operations for copying data from one GPU to all GPUs, operations for moving data from one GPU to another GPU or otherwise organizing the data on multiple GPUs to optimize processing of similar or related data on each of the GPUs, etc. Such primitives can be used to optimally distribute the data across the multiple GPUs for performing parallel processing to accelerate the database query.

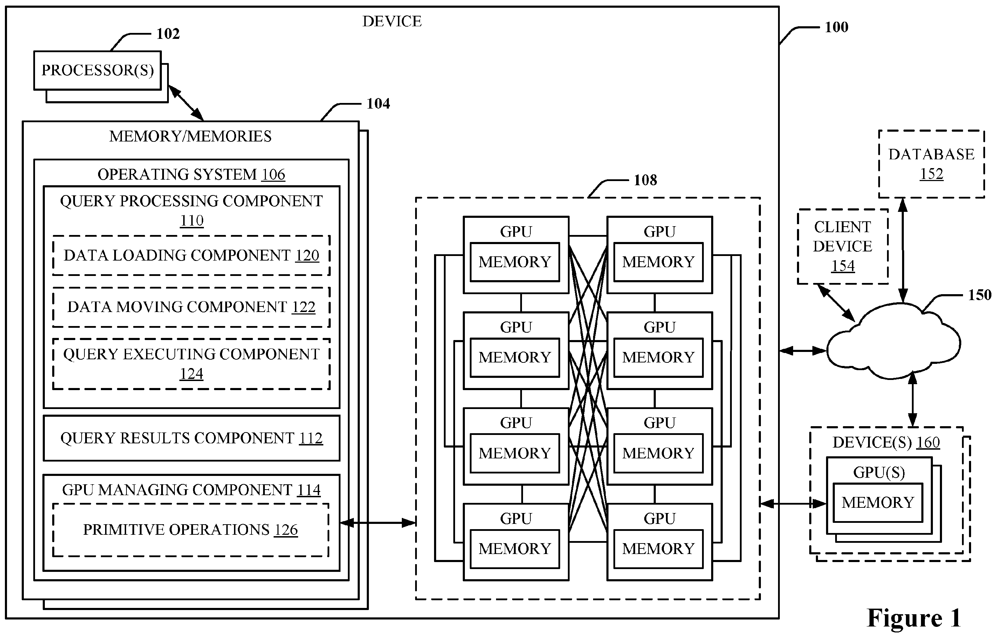

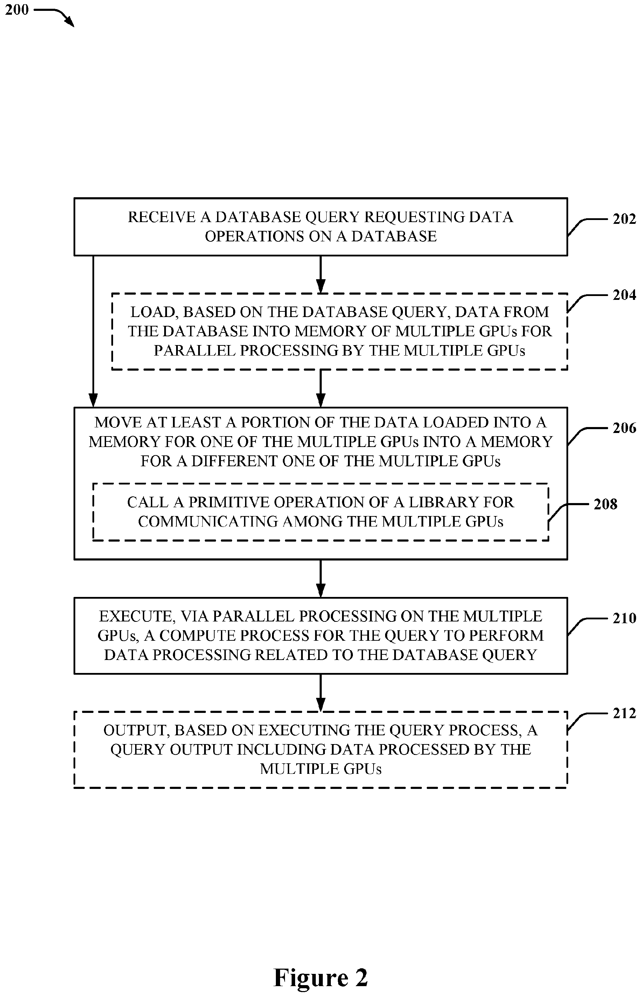

Turning now to Figures 1-9, examples are depicted with reference to one or more components and one or more methods that may perform the actions or operations described herein, where components and/or actions/operations in dashed line may be optional. Although the operations described below in Figure 2 are presented in a particular order and/or as being performed by an example component, the ordering of the actions and the components performing the actions may be varied, in some examples, depending on the implementation. Moreover, in some examples, one or more of the actions, functions, and/or described components may be performed by a specially-programmed processor, a processor executing specially-programmed software or computer-readable media, or by any other combination of a hardware component and/or a software component capable of performing the described actions or functions.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

Figure 1 is a schematic diagram of an example of a device 100 (e.g., a computing device) for performing functions related to accelerating database queries using multiple GPUs, in accordance with aspects described herein. In an example, device 100 can include one or more processors 102 and/or memory/memories 104 configured to execute or store instructions, data, or other parameters related to providing an operating system 106, which can execute one or more applications or processes. For example, processor(s) 102 and memory/memories 104 may be separate components communicatively coupled by a bus (e.g., on a motherboard or other portion of a computing device, on an integrated circuit, such as a system on a chip (SoC), etc.), components integrated within one another (e.g., processor(s) 102 can include the memory/memories 104 as an on-board component), and/or the like. Memory/memories 104 may store instructions, parameters, data structures, etc. for use/execution by processor(s) 102 to perform functions described herein. In another example, processor(s) 102 and/or memory/memories 104 can be distributed over multiple devices or physical computing nodes in a network (e.g., in a cloud-based computing platform) for providing the functions of the various components described herein.

Device 100 can include a collection of multiple GPUs 108, which may each have an associated memory. For example, the collection of multiple GPUs 108 can include two or more GPUs, though eight GPUs are shown as one specific non-limiting example. The multiple GPUs 108 can be interconnected using a high-bandwidth link, which may support communications primitives for exchanging data between the multiple GPUs 108 and/or between the memories thereof. In another example, device 100 can communicate with one or more other devices 160 over a high-bandwidth network link (e.g., via a network 150 or other interconnected infrastructure, such as Ethernet or InfiniBand) that can each have one or more GPUs with associated memory. For example, each device 100 and/or 160 can be a VM that can have a number of connections with other VMs, and can use a remote direct memory access (RDMA) mechanism (e.g., GPUDirect RDMA) to access memory between the GPUs. The GPUs among devices 100 and/or 160 can be interconnected using a link in this regard as well, which may support primitives for exchanging data between the multiple GPUs 108 and/or between the memories thereof. In an example, one or more of the multiple GPUs 108 can be communicatively coupled to the one or more processors 102 and/or memory/memories 104 via a bus, as described above. In an example, the one or more processors 102 may load data in memory/memories 104 for other operations, and may copy the data from memory/memories 104 for executing a query on a GPU 108 over the bus connecting the GPU 108 to the one or more processors 102 and/or memory/memories 104, in accordance with aspects described herein.

In one example, the operating system 106 can execute one or more applications or processes, such as, but not limited to, a query processing component 110 for processing a database query using multiple GPUs that are interconnected on the device 100 (e.g., GPUs 108) and/or with another device 160 (e.g., at least one GPU 108 of the device 100 and at least one GPU of at least one device 160), a query results component 112 for obtaining query results from the multiple GPUs, formatting the query results, and/or providing the query results to a requesting device, and/or a GPU managing component 114 for managing communications or data exchange between the multiple GPUs (e.g., GPUs 108 and/or at least one GPU 108 of the device 100 and at least one GPU of at least one other device 160).

In an example, query processing component 110 can include a data loading component 120 for loading data from a database 152, as identified from a query request, to the multiple GPUs (e.g., GPUs 108 and/or at least one GPU 108 of the device 100 and at least one GPU of at least one other device 160) for processing, a data moving component 122 for moving the data among the multiple GPUs, and/or a query executing component 124 for executing the query by parallel processing using the multiple GPUs to process data loaded in the memory of the GPUs. In an example, GPU managing component 114 can include or support one or more primitive operations 126 to facilitate communicating or exchanging data between the interconnected GPUs in the collection of GPUs 108 (and/or across devices 100 and/or 160) and/or between the memories thereof. Though shown as part of GPU managing component 114, in some examples primitive operations 126 can execute at least partially on one or more of the multiple GPUs 108, or may otherwise include or cause execution of processes or instructions on one or more of the multiple GPUs 108.

In addition, device 100 can communicate with one or more databases 152 over the network 150, where the database(s) 152 can store data and/or provide the data for query execution. For example, a database 152 can be substantially any type of database, such as a relational database that stores data in tables having rows and columns, a graph database that stores data in vertex/edge format, data files that store data in hierarchical formats, etc. Database 152 can provide the data for executing certain types of queries, such as structured query language (SQL) queries and/or the like. In another example, device 100 may communicate with one or more client devices 154, which can submit a query request to the device 100, receive query results from the device 100, etc. In an example, client device(s) 154 and/or device(s) 160 may also include processor(s), memory/memories, operating system, etc., as shown and described for device 100, to facilitate performing functions described thereof.

In one example, query processing component 110 can receive a query request (e.g., from a client device 154), and can obtain associated data from database 152 for loading into multiple GPUs. In this example, data loading component 120 can load data obtained from the database 152 into multiple GPUs in the collection of multiple GPUs 108 and/or in one or more GPUs 108 of the device along with one or more GPUs of one or more other devices 160, and/or into the memories thereof. In an example, data moving component 122 can move or copy the data among the multiple GPUs for performing certain types of queries. In an example, GPU managing component 114 can move or copy the data among the multiple GPUs using one or more primitive operations 126. With the data moved or copied as desired for the query operation, query executing component 124 can perform a compute process associated with the query via the multiple GPUs using parallel processing to accelerate the query. Query results component 112 can provide query results based on the query request (e.g., to client device 154, where client device 154 requested the query or otherwise).

Figure 2 is a flowchart of an example of a method 200 for accelerating database queries by using multiple GPUs, in accordance with aspects described herein. For example, method 200 can be performed by a device 100 and/or one or more components thereof to facilitate accelerating a database query using multiple GPUs 108 interconnected at the device and/or at least one GPU 108 at the device 100 interconnected with one or more other GPUs of one or more other devices 160, as described herein.

In method 200, at action 202, a database query requesting data operations on a database can be received. In an example, query processing component 110, e.g., in conjunction with processor(s) 102, memory/memories 104, operating system 106, etc., can receive the database query requesting the data operations on the database. For example, query processing component 110 may receive the query from a client device 154 or other device or interface. The query may be a SQL query and/or may otherwise identify sources of data to be used in the query, such as one or more tables, databases that include the tables, columns of the tables, etc. For example, the query may be analytical query that can include multiple steps and/or data sources, such as a join query, an existence query, a groupby query, etc.

In method 200, optionally at action 204, data from the database can be loaded, based on the database query, into memory of the multiple GPUs for parallel processing by the multiple GPUs. In an example, data loading component 120, e.g., in conjunction with processor(s) 102, memory/memories 104, operating system 106, query processing component 110, etc., can load, based on the database query, data from the database (e.g., database 152) into memory of the multiple GPUs for parallel processing by the multiple GPUs. For example, data loading component 120 can identify the data to obtain from the database 152 via the query (e.g., based on a data source, table, etc. identified in the query), and can obtain the associated data for loading to the GPUs. As described, for example, each GPU can have its own dedicated high-bandwidth memory (e.g., video random access memory (VRAM)), which can include a collection of memory registers, local memory, global memory, etc. In an example, data loading component 120 can load the data into the GPU memories using GPU managing component 114 to communicate with each of the multiple GPUs, or can provide the data to GPU managing component 114 to distribute among the multiple GPUs. In some examples, the data may already be loaded due to data load of a previous query execution, in which case data loading component 120 may not repeat loading of the data into the memory of the multiple GPUs.

In one example, as described, the multiple GPUs can include multiple GPUs 108 interconnected via a high-bandwidth link at the device 100, in which case GPU managing component 114 can distribute the data among the multiple GPUs 108 interconnected at the device 100. In another example, as described, the multiple GPUs can include at least one GPU 108 at the device 100 (e.g., of a VM) interconnected over a high-bandwidth link with at least one GPU of at least one other device 160 (e.g., another VM), in which case GPU managing component 114 can distribute the data among the at least one GPU at the device 100 and the at least one GPU of at least one other device 160. In either case, for example, GPU managing component 114 can include a library, which may be provided by a manufacturer of the multiple GPUs, to facilitate inter-GPU data movement and communication, topology detection of the multiple GPUs, routing determination for routing data or messages among the multiple GPUs, etc.

In an example, the library, for example, may include one or more primitive operations 126, such as an AllReduce primitive operation for performing reductions on data (for example, sum, max) across GPUs and writing the result in the receive buffers (e.g., in memory) of every rank, where a rank can refer to an incrementing index assigned to each GPU (e.g., 0, 1, 2, or 3 for four GPUs) indicating an order of the GPUs. The one or more primitive operations 126 may include a Broadcast primitive operation that copies an N-element buffer on the root rank (e.g., a first GPU indicated as a root) to all ranks (e.g., to each GPU). The one or more primitive operations 126 may include a Reduce primitive operation performing a similar operation as AllReduce, but writing the result only in the receive buffers of a specified root rank (e.g., a GPU having a specified root rank). The one or more primitive operations 126 may include an AllGather primitive operation where each of the K GPUs aggregates N values from every GPU into an output of dimension K*N. The output can be ordered by rank index. The one or more primitive operations 126 may include a ReduceScatter primitive operation performing a similar operation as the Reduce operation, except the result is scattered in equal blocks among ranks, each rank getting a chunk of data based on its rank index.

In method 200, at action 206, at least a portion of data loaded into a memory for one of the multiple GPUs can be moved into a memory for a different one of the multiple GPUs. In an example, data moving component 122, e.g., in conjunction with processor(s) 102, memory/memories 104, operating system 106, query processing component 110, etc., can move at least the portion of the data loaded into the memory for one of the multiple GPUs into a memory for a different one of the multiple GPUs. For example, data moving component 122 can employ the GPU managing component 114 and/or the associated library or primitive operations 126 to move the data among GPUs. In addition, for example, moving the data can include moving or copying the data from one GPU memory (e.g., memory register, local memory, etc. at a GPU) to another GPU memory (e.g., memory register, local memory, etc., at another GPU).

In moving at least the portion of the data at action 206, optionally at action 208, a primitive operation of a library for communicating among the multiple GPUs can be called. In an example, data moving component 122, e.g., in conjunction with processor(s) 102, memory/memories 104, operating system 106, query processing component 110, etc., can call the primitive operation (e.g., a primitive operation 126 via GPU managing component 114) of a library for communicating among the multiple GPUs. For example, data moving component 122 can call one of the primitive operations 126 described above (e.g., AllReduce, Broadcast, Reduce, AllGather, ReduceScatter, etc.), such as a broadcast operation to copy data from a memory of one of the multiple GPUs to the memory of all of the multiple GPUs.

In another example, GPU managing component 114 may provide a function that calls or utilizes one or more primitive operations 126, which data moving component 122 can utilize to move the data. For example, GPU managing component 114 may implement an all-gather operation to copy data from each memory of each of the multiple GPUs to the memory of all of the multiple GPUs, an all-to-all operation to move data from a first memory of first one of the multiple GPUs to a second memory of a second one of the multiple GPUs, etc. Data moving component 122 may utilize the all-gather or all-to-all function to move or copy data among the multiple GPUs, and the GPU managing component 114 can call the associate primitive operation(s) 126 based on receiving the all-gather or all-to-all function call from data moving component 122.

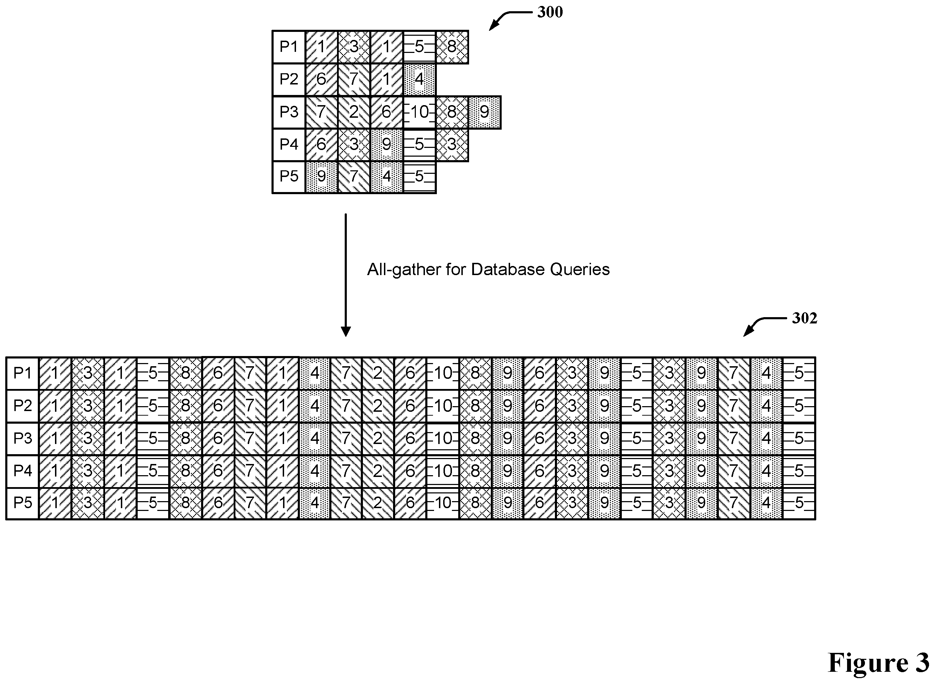

Figure 3 illustrates an example of a memory configuration 300 for multiple GPUs and performing an all-gather function for database queries on the memory, in accordance with aspects described herein. Memory configuration 300 includes allocations of memory for each of multiple GPUs (P1, P2, P3, P4, and P5), where each allocation is labeled with an integer and a fill pattern. The integer can indicate certain data (e.g., each integer can represent the same data) or can represent data from a certain source (e.g., a data source, table, column, etc.), and the fill pattern can indicate a key associated with the data (e.g., a column value having a certain key value). In this regard, for example, data 1 and 6 can be different data (e.g., can correspond to different data, different tables, different columns, different sources, etc.) and can have a same key, data 3 and 8 can be different data and can have a same key, etc. GPU managing component 114 can provide an all-gather for database queries function, which can use one or more primitive operations 126 to copy the data from each of the multiple GPUs to each of the other GPUs. As such, the memory configuration for the multiple GPUs 302 after performing the all-gather for database queries can result in each GPU memory having the data from the memory of each of the multiple GPUs. The all-gather function can be performed one column at a time, or multiple columns can be batched in a table or columns from multiple tables. The all-gather function can be used in certain examples described herein.

For example, as shown in Figure 3, each of the GPUs may have data with a certain number of values, and the number of values can be different across one or some of the GPUs. For example, one GPU k has N_k values (e.g., P1 has 5 values, P2 has 4 values, P3 has 6 values, P4 has 5 values, and P5 has 4 values), and result of the all-gather has summation (over k) N_k values (e.g., 24 values) at each GPU. In an example, primitive operations 126 may include an AllGather operation that assumes the same number of values for the multiple GPUs (K*N values in total) for performing other operations using the multiple GPUs. Such an operation may be too restrictive for database operations, e.g., as the partition function can partition columns into unequal sizes across GPUs, or filter operations can select different number of values on different GPUs, etc. In accordance with aspects described herein, GPU managing component 114 can implement the all-gather function described herein (and/or the all-to-all function described herein) on top of the primitives in primitive operations 126, such as an AllGather operation, to handle N_k with unequal sizes. This can enable distributed query execution, using multiple GPUs, for databases as described herein.

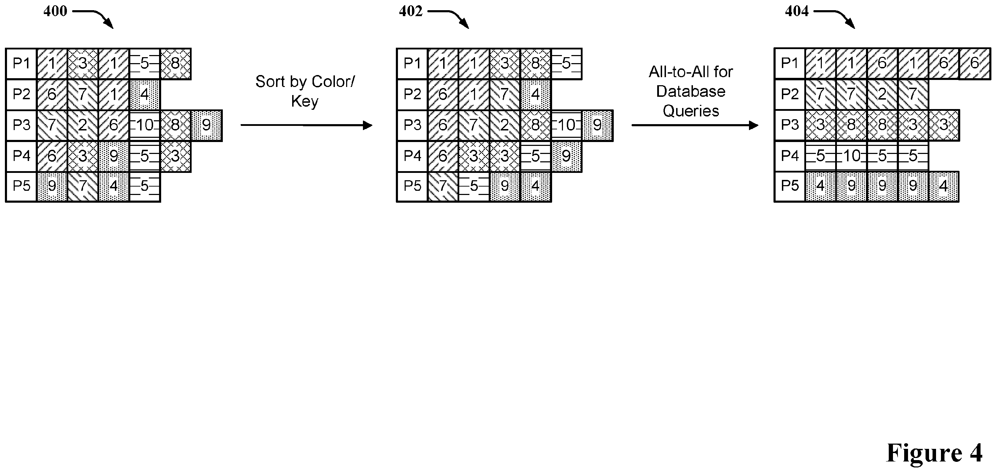

Figure 4 illustrates an example of a memory configuration 400 for multiple GPUs and performing an all-to-all function for database queries on the memory, in accordance with aspects described herein. Memory configuration 400 includes allocations of memory for each of multiple GPUs (P1, P2, P3, P4, and P5), where each allocation is labeled with an integer and a fill pattern. The integer can indicate certain data (e.g., each integer can represent the same data) or can represent data from a certain source (e.g., a data source, table, column, etc.), and the fill pattern can indicate a key associated with the data (e.g., a column value having a certain key value). In this regard, for example, data 1 and 6 can be different data (e.g., can correspond to different data, different tables, different columns, different sources, etc.) and can have a same key, data 3 and 8 can be different data and can have a same key, etc. GPU managing component 114 can provide an all-to-all for database queries function, which can use one or more primitive operations 126 to sort the data at each GPU by color (or by key), which is shown in memory configuration 402. Then, the all-to-all for database queries function can move the data among the multiple GPUs so each GPU has data associated with the same key, resulting in memory configuration 404. The all-to-all function can be performed one column at a time, or multiple columns can be batched in a table or columns from multiple tables. The all-to-all function can be used in certain examples described herein.

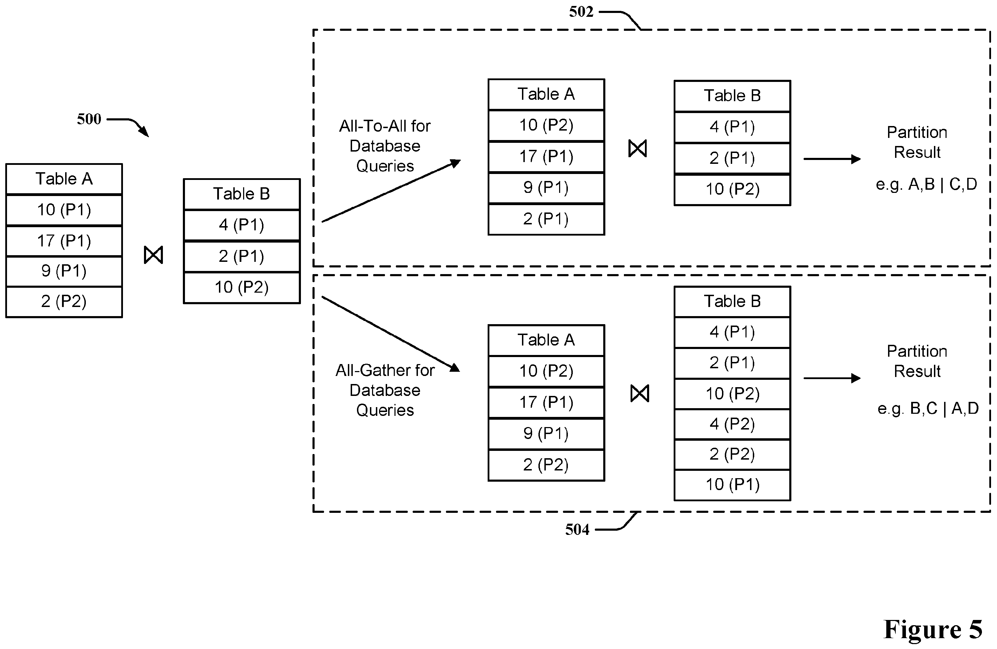

Figure 5 illustrates an example of tabular data 500 for a database query and performing an all-to-all or an all-gather function on the tabular data 500 in moving the data among multiple GPUs, in accordance with aspects described herein. For example, data 500 includes Table A and Table B, where Table A has associated data having key values 10, 17, 9, and 2, which can represent a key (e.g., a partition key) used to partition the data, and Table B has associated data having key values 4, 2, and 10. In Figure 5, "(P1)" indicates the data is stored in memory of one GPU labeled P1, and "(P2)" indicates the data is stored in memory of another GPU labeled P2. In one example, the functions can be performed as part of performing a join of Table A and Table B.

In one example, using the all-to-all for database queries function described above, GPU managing component 114 can move the data in Table A associated with key value 10 stored in the memory on GPU P1 to the memory on GPU P2 (e.g., based on GPU P2 already having data in Table B associated with key value 10 stored in the memory on GPU P2). Similarly, for example, GPU managing component 114 can move the data in Table A associated with key value 2 stored in the memory on GPU P2 to the memory on GPU P1 (e.g., based on GPU P1 already having data in Table B associated with key value 2 stored in the memory on GPU P1). In this regard, the data can be stored on the GPUs such that data associated with the same key value is stored on the same GPU, as shown at 502. The output of the join using all-to-all can partition values A, B, C, D in a column of the join result as "A, B" and "C, D" on the two GPUs.

In another example, using the all-gather for database queries function described above, GPU managing component 114 can copy the data in Table B stored in the memory on GPU P1 to the memory on GPU P2 and can copy the data in Table B stored in the memory on GPU P2 to the memory on GPU P1. In this regard, each GPU P1 and P2 have store the Table B data in its memory, as shown at 504. The output of the join using all-to-all can partition values A, B, C, D in a column of the join result as "B, C" and "A, D" on the two GPUs.

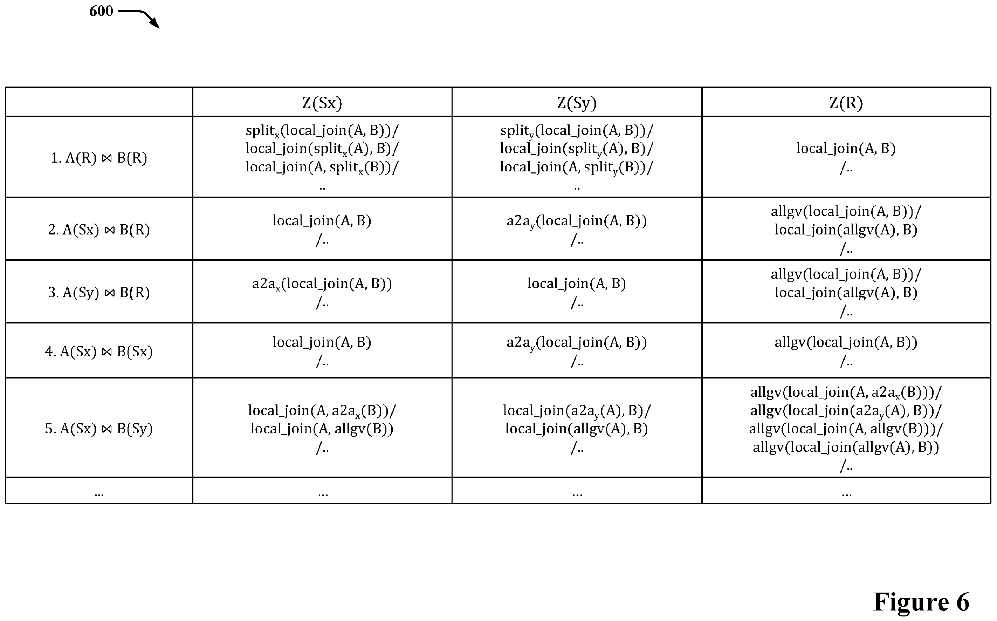

Figures 6-8 illustrate various alternative ways for implementing the primitive functions described herein given an input state (partitioned by some column, or replicated) for each table and the result (partitioned by some column or replicated). The various combinations may allow a query optimizer to have the flexibility of selecting a desired or optimal combination of input and result state for lowest query processing time overall. Using the primitive functions and operations locally on each GPU, can allow for using substantially any combination. In this regard, aspects described herein are not limited to particular combination of input and output states. Moreover, for example, for each combination, multiple alternative ways of implementing the computation for the combination may be possible. The query optimizer can select a desired or optimal alternative. Figures 6-8 depict some example alternatives for each combination, but these are not an exhaustive list of alternatives for any combination.

Figure 6 illustrates an example of join operations 600 for performing on a Table A and Table B, in accordance with aspects described herein. Join operations 600 can include joins for various output states, including Z(Sx), Z(Sy), and Z(R) (Z denotes a table result), and the listed join functions can include A(R) joined with B(R), A(Sx) joined with B(R), A(Sy) joined with B(R), A(Sx) joined with B(Sx), A(Sx) joined with B(Sy), etc. R can represent full replicas of data on each GPU, Sx can represent slice of data when partitioned using a partitioning function on column x, Sy can represent slice of data when partitioned using a partitioning function on column y. In the list of join operations 600, *splitₓ*(*T*) can represent a partition of data items T and return items that are within "partition-by-x" domain, allgv can represent an all-gather function for database queries, *a*2*a_{X}*(*T*) can represent the input data T (which was partitioned on a different column) is shuffled/redistributed among GPUs by an all-to-all function for database queries, as described above, using a partition function on column x, and *a*2*a_{y}*(*T*) can represent the input data T (which was partitioned on a different column) is shuffled/redistributed among GPUs by an all-to-all function for database queries, as described above, using a partition function on column y. In this regard, for example, given a join operation query processing component 110 can perform the listed functions other than the primitive operations (e.g., other than a2a and allgv), and can employ the GPU managing component 114 to perform the primitive operations, such as a2a and allgv to move data among the memories of the multiple GPUs for performing compute operations thereover (e.g., local_join, where applicable).

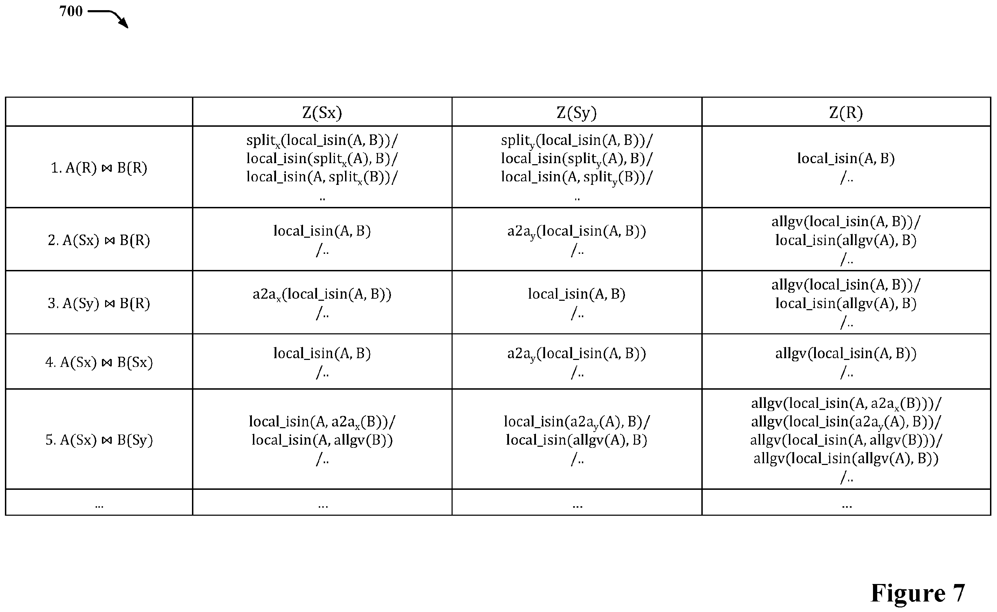

Figure 7 illustrates an example of existence operations 700 for performing on a Table A and Table B, in accordance with aspects described herein. Existence (is in, or "isin") operations 700 can include is ins for various output states, including Z(Sx), Z(Sy), and Z(R), and the listed is in functions can include A(R) IN B(R), A(Sx) IN B(R), A(Sy) IN B(R), A(Sx) IN B(Sx), A(Sx) IN B(Sy), etc. R can represent full replicas of data on each GPU, Sx can represent slice of data when partitioned using a partitioning function on column x, Sy can represent slice of data when partitioned using a partitioning function on column y. In the list of existence operations 700, *splitₓ*(*T*) can represent a partition of data items T and return items that are within "partition-by-x" domain, allgv can represent an all-gather function for database queries, *a*2*a_{X}*(*T*) can represent the input data T (which was partitioned on a different column) is shuffled/redistributed among GPUs by an all-to-all function for database queries, as described above, using a partition function on column x, and *a*2*a_{y}*(*T*) can represent the input data T (which was partitioned on a different column) is shuffled/redistributed among GPUs by an all-to-all function for database queries, as described above, using a partition function on column y, as described above. In this regard, for example, given a is in operation query processing component 110 can perform the listed functions other than the primitive operations (e.g., other than a2a and allgv), and can employ the GPU managing component 114 to perform the primitive operations, such as a2a and allgv to move data among the memories of the multiple GPUs for performing compute operations thereover (e.g., local_isin, where applicable).

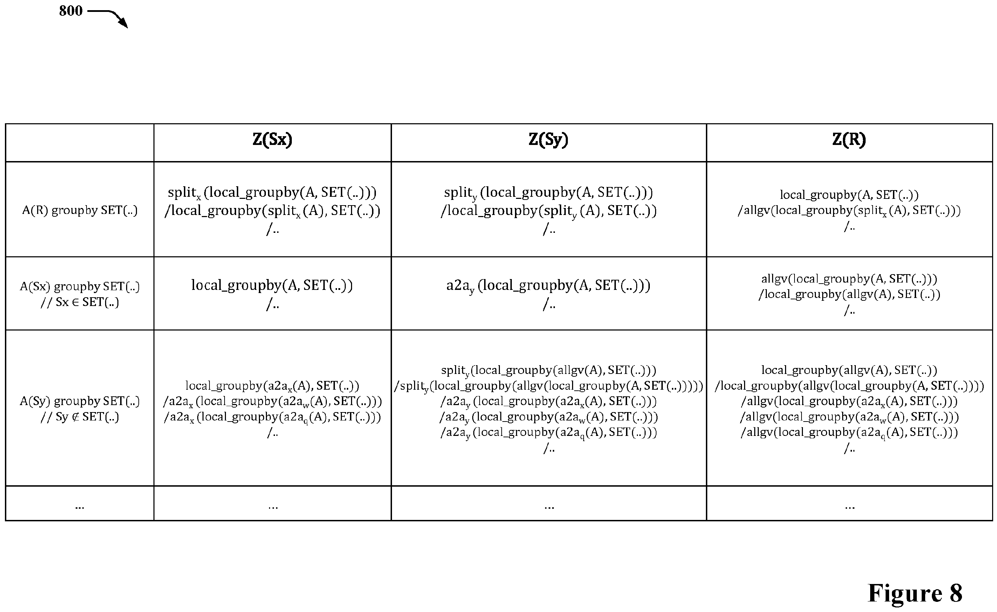

Figure 8 illustrates an example of groupby operations 800 for performing on a Table A, in accordance with aspects described herein. Groupby operations 800 can include groupbys for various output states, including Z(Sx), Z(Sy), and Z(R), and the listed groupby functions can include A(R) groupby SET (...), A(Sx) groupby SET(...), A(Sy) groupby SET(...), etc. R can represent full replicas of data on each GPU, Sx can represent slice of data when partitioned using a partitioning function on column x, Sy can represent slice of data when partitioned using a partitioning function on column y. In the list of groupby operations 800, *splitₓ*(*T*) can represent a partition of data items T and return items that are within "partition-by-x" domain, allgv can represent an all-gather function for database queries, *a*2*a_{X}*(*T*) can represent the input data T (which was partitioned on a different column) is shuffled/redistributed among GPUs by an all-to-all function for database queries, as described above, using a partition function on column x, and *a*2*a_{y}*(*T*) can represent the input data T (which was partitioned on a different column) is shuffled/redistributed among GPUs by an all-to-all function for database queries, as described above, using a partition function on column y, as described above. In this regard, for example, given a groupby operation query processing component 110 can perform the listed functions other than the primitive operations (e.g., other than a2a and allgv), and can employ the GPU managing component 114 to perform the primitive operations, such as a2a and allgv to move data among the memories of the multiple GPUs for performing compute operations thereover (e.g., local_groupby, where applicable).

Referring back to Figure 2, in method 200, at action 210, a compute process for the query can be executed, via parallel processing on the multiple GPUs, to perform data processing related to the database query. In an example, query executing component 124, e.g., in conjunction with processor(s) 102, memory/memories 104, operating system 106, query processing component 110, etc., can execute, via parallel processing on the multiple GPUs (e.g., interconnected GPUs 108 on device 100 or at least one GPU 108 on device 100 and at least one other GPU on at least one other device 160), the compute process for the query to perform data processing related to the database query. As described, with the data loaded in the memory of the multiple GPUs, as desired, one or more compute processes can be executed on the multiple GPUs in parallel (e.g., in parallel on a given GPU for data stored in the memory on that GPU and/or also in parallel among the multiple GPUs). This can accelerate the query using the multiple GPUs, as described. As described, for example, the compute process may include a join compute process (e.g., local_join), an existence compute process (e.g., local_isin), a groupby compute process (e.g., local_groupby), etc.

In method 200, optionally at action 212, a query output including data processed by the multiple GPUs can be output based on executing the query process. In an example, query results component 112, e.g., in conjunction with processor(s) 102, memory/memories 104, operating system 106, etc., can output, based on executing the query process, the query output including the data processed by the multiple GPUs. For example, query results component 112 can output the query output to a client device 154 that requested the query. In another example, query results component 112 can output query processing results from the multiple GPUs to the query processing component 110 (e.g., for use in another portion of an analytical query), etc.

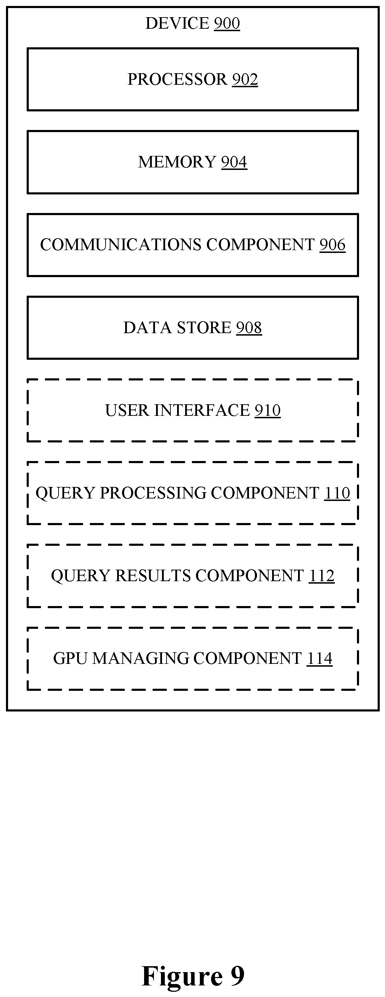

Figure 9 illustrates an example of device 900 including additional optional component details as those shown in Figure 1. In one aspect, device 900 may include processor 902, which may be similar to processor(s) 102 for carrying out processing functions associated with one or more of components and functions described herein. Processor 902 can include a single or multiple set of processors or multi-core processors. Moreover, processor 902 can be implemented as an integrated processing system and/or a distributed processing system.

Device 900 may further include memory 904, which may be similar to memory/memories 104 such as for storing local versions of operating systems (or components thereof) and/or applications being executed by processor 902, such as a query processing component 110, query results component 112, GPU managing component 114 (e.g., for managing one or more GPUs of the device 900 and/or other devices, which are not shown for ease of explanation), etc. Memory 904 can include a type of memory usable by a computer, such as random access memory (RAM), read only memory (ROM), tapes, magnetic discs, optical discs, volatile memory, nonvolatile memory, and any combination thereof.

Further, device 900 may include a communications component 906 that provides for establishing and maintaining communications with one or more other devices, parties, entities, etc. utilizing hardware, software, and services as described herein. Communications component 906 may carry communications between components on device 900, as well as between device 900 and external devices, such as devices located across a communications network and/or devices serially or locally connected to device 900. For example, communications component 906 may include one or more buses, and may further include transmit chain components and receive chain components associated with a wireless or wired transmitter and receiver, respectively, operable for interfacing with external devices.

Additionally, device 900 may include a data store 908, which can be any suitable combination of hardware and/or software, that provides for mass storage of information, databases, and programs employed in connection with aspects described herein. For example, data store 908 may be or may include a data repository for operating systems (or components thereof), applications, related parameters, etc.) not currently being executed by processor 902. In addition, data store 908 may be a data repository for query processing component 110, query results component 112, GPU managing component 114, etc., and/or one or more other components of the device 900.

Device 900 may optionally include a user interface component 910 operable to receive inputs from a user of device 900 and further operable to generate outputs for presentation to the user. User interface component 910 may include one or more input devices, including but not limited to a keyboard, a number pad, a mouse, a touch-sensitive display, a navigation key, a function key, a microphone, a voice recognition component, a gesture recognition component, a depth sensor, a gaze tracking sensor, a switch/button, any other mechanism capable of receiving an input from a user, or any combination thereof. Further, user interface component 910 may include one or more output devices, including but not limited to a display, a speaker, a haptic feedback mechanism, a printer, any other mechanism capable of presenting an output to a user, or any combination thereof.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, one or more of the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described herein that are known or later come to be known to those of ordinary skill in the art are expressly included and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

## Claims

1. A device for utilizing multiple graphics processing units (GPUs) to accelerate a database query, comprising:
one or more memories storing instructions; and
one or more processors coupled to the one or more memories and configured to execute the instructions to:
receive a database query requesting data operations on a database;
load, based on the database query, data from the database into memories of multiple GPUs for parallel processing by the multiple GPUs;
move at least a portion of the data loaded into a memory for one of the multiple GPUs into a memory for a different one of the multiple GPUs; and
execute, via parallel processing on the multiple GPUs, a compute process for the database query to perform data processing related to the database query.

2. The device of claim 1, wherein the one or more processors are configured to execute the instructions to move at least the portion of the data at least in part by using a primitive operation of a library for communicating among the multiple GPUs.

3. The device of claim 2, at least one of:
wherein the primitive operation includes a broadcast operation to copy data from a memory of one of the multiple GPUs to the memories of all of the multiple GPUs;
wherein the primitive operation includes an all-gather operation to copy data from each memory of each of the multiple GPUs to the memories of all of the multiple GPUs; and
wherein the primitive operation includes an all-to-all operation to move data from a first memory of first one of the multiple GPUs to a second memory of a second one of the multiple GPUs, wherein the primitive operation is operated based on a partition key.

4. The device of one of claims 1 to 3, at least one of:
wherein the compute process is one of a join operation, an existence operation, or a groupby operation of the database query; and
wherein the one or more processors are configured to execute the instructions to output, based on executing the compute process, a query output including data processed by the multiple GPUs.

5. The device of one of claims 1 to 4, further comprising the multiple GPUs interconnected using a high-bandwidth link.

6. The device of one of claims 1 to 4, further comprising at least one GPU, wherein the multiple GPUs include the at least one GPU interconnected with at least another GPU of at least one other device using a high-bandwidth network link.

7. A computer-implemented method for using multiple graphics processing units (GPUs) to accelerate a database query, comprising:
loading, for a database query, data from a database into memories of multiple GPUs for parallel processing by the multiple GPUs;
moving at least a portion of the data loaded into a memory for one of the multiple GPUs into a memory for a different one of the multiple GPUs;
executing, via parallel processing on the multiple GPUs, a compute process for the database query to perform data processing related to the database query; and
providing query results of the database query based on output from executing the compute process on the multiple GPUs.

8. The computer-implemented method of claim 7, wherein moving at least the portion of the data is performed by using a primitive operation of a library for communicating among the multiple GPUs.

9. The computer-implemented method of claim 8, wherein the primitive operation includes a broadcast operation to copy data from a memory of one of the multiple GPUs to the memories of all of the multiple GPUs.

10. The computer-implemented method of claim 8, one of:
wherein the primitive operation includes an all-gather operation to copy data from each memory of each of the multiple GPUs to the memories of all of the multiple GPUs; and
wherein the primitive operation includes an all-to-all operation to move data from a first memory of first one of the multiple GPUs to a second memory of a second one of the multiple GPUs, wherein the primitive operation is operated based on a partition key.

11. The computer-implemented method of one of claims 7 to 10, wherein the compute process is one of a join operation, an existence operation, or a groupby operation of the database query.

12. A non-transitory computer-readable medium storing instructions thereon that, when executed by at least one computing device, cause the at least one computing device to perform operations for using multiple graphics processing units (GPUs) to accelerate a database query, comprising:
loading, for a database query, data from a database into memories of multiple GPUs for parallel processing by the multiple GPUs;
moving at least a portion of the data loaded into a memory for one of the multiple GPUs into a memory for a different one of the multiple GPUs; and
executing, via parallel processing on the multiple GPUs, a compute process for the database query to perform data processing related to the database query.

13. The non-transitory computer-readable medium of claim 12, wherein moving at least the portion of the data is performed by using a primitive operation of a library for communicating among the multiple GPUs.

14. The non-transitory computer-readable medium of claim 13, one of:
wherein the primitive operation includes a broadcast operation to copy data from a memory of one of the multiple GPUs to the memories of all of the multiple GPUs; and
wherein the primitive operation includes one of an all-gather operation to copy data from each memory of each of the multiple GPUs to the memories of all of the multiple GPUs, or an all-to-all operation to move data from a first memory of first one of the multiple GPUs to a second memory of a second one of the multiple GPUs, wherein the primitive operation is operated based on a partition key.

15. The non-transitory computer-readable medium of one of claims 12 to 14, further comprising outputting, based on executing the compute process, a query output including data processed by the multiple GPUs.
